Europäisches Patentamt

European Patent Office

Office européen des brevets

(19)

(11) Veröffentlichungsnummer : **0 046 491**
**B1**

(12)

# EUROPÄISCHE PATENTSCHRIFT

(45) Veröffentlichungstag der Patentschrift :
22.10.86

(21) Anmeldenummer : 81105140.8

(22) Anmeldetag : 02.07.81

(51) Int. Cl.⁴ : **G 01 J   1/44, G 03 B  27/73**

(54) **Lichtmessverfahren und Lichtmessgerät.**

(30) Priorität : 22.08.80 IT 483880

(43) Veröffentlichungstag der Anmeldung :
03.03.82 Patentblatt 82/09

(45) Bekanntmachung des Hinweises auf die Patenterteilung : 22.10.86 Patentblatt 86/43

(84) Benannte Vertragsstaaten :
AT CH DE FR GB LI NL

(56) Entgegenhaltungen :
DE-A- 2 834 642
US-A- 3 879 135
US-A- 3 892 493
US-A- 4 167 665

(73) Patentinhaber : **Durst AG Fabrik Fototechnischer
Apparate
Gerbergasse 58
I-39100 Bozen (IT)**

(72) Erfinder : **Vinatzer, Alex
Angerweg 19
I-39042 Brixen / Milland (IT)**

Jouve, 18, rue St-Denis, 75001 Paris, France

## Beschreibung

Die Erfindung betrifft ein Lichtmeßverfahren, bei welchem in einer der Meßphase vorausgehenden Dunkelphase ein Ab- bzw. Nachgleich des Meßnullpunktes erfolgt, wobei das in der Dunkelphase an einem Meßverstärkerausgang vorhandene, hauptsächlich aus Fehleranteilen zusammengesetzte Signal in einer zwischen Ausgang und Eingang des Meßverstärkers gelegten Regeleinrichtung kompensiert wird und das entstandene Kompensationssignal durch Speicherung auch in der Meßphase erhalten bleibt, sowie ein Lichtmeßgerät zur Durchführung des Verfahrens mit mindestens einem lichtelektrischen Wandler, einer diesem nachgeschalteten Meßsignal-Auswertschaltung mit Anzeigevorrichtung und einer Schaltungseinrichtung zur Störsignalkompensation.

Lichtmeßgeräte hoher Empfindlichkeit wie sie im grafischen und fotografischen Anwendungsbereich eingesetzt werden, verwenden als fotoelektrische Wandlerelemente meist Fotodioden. Solche Dioden liefern bekanntlich einen linear von der auffallenden Lichtstärke abhängigen elektrischen Strom, der in den genannten Anwendungen häufig im pA-Bereich liegt. Bei so extrem niedrigen Signalwerten stellt die Meßsignalauswertung hohe Anforderungen bezüglich Stabilität und Langzeitkonstanz an den dem Fotoelement nachgeschalteten Meßverstärker. Selbst bei Verwendung driftarmer Bauteile entstehen durch Temperatureinfluß und Alterung Fehleranteile im Meßsignal, die nicht vernachlässigbar sind. Beispielsweise führt allein die Temperaturabhängigkeit der Offsetspannung eines als Meßverstärker verwendeten Operationsverstärkers zu Störsignalen am Verstärkerausgang, die das Nutzsignal um ein Mehrfaches übersteigen können.

Bei Verwendung anderer lichtelektrischer Wandler als Fotodioden, beispielsweise Fotovervielfacher, kann auch der temperaturabhängige Dunkelstrom des Fotoelementes in nicht zu vernachlässigendem Maße störend in das Meßergebnis eingehen. Zur Kompensierung solcher Fehlersignale wird in bekannten Meßeinrichtungen der eingangs genannten Art ein Meßnullpunkt-Abgleich bei abgedunkeltem Fotoelement vorgenommen, der entweder in gewünschten Zeitabständen oder selbsttätig in fester Folge nachgeglichen wird.

Zu diesem Zwecke wird in bekannten Vorrichtungen der eigentlichen Meßphase, in der das Meßlicht auf das fotoelektrische Element fällt, eine Abgleich- bzw. Dunkelphase, in der das Fotoelement durch eine geeignete Abdunkelungsvorrichtung abgedunkelt ist, vorausgeschickt. Dabei wird das bei abgedunkeltem Element entstehende Signal in einer entsprechenden elektronischen Speichervorrichtung gespeichert und während der Meßphase dem Meßsignal entgegengesetzt.

Eine derartige Vorrichtung ist in der DE-A-23 31 191 beschrieben. Darin wird eine mechanische Abdunkelungsvorrichtung so gesteuert, dass sie das fotoelektrische Element in abwechselnder Folge einmal abdeckt und dann wieder freigibt ; synchron dazu werden Schaltkontakte so betätigt, dass das im Meßverstärker während der Dunkelphase auftretende Signal in einem Kondensator gespeichert und während der darauffolgenden Meßphase zur Bereinigung des von demselben Fehlersignal behafteten Meßsignals verwendet wird.

Als Nachteil dieser Vorrichtung muß der verhältnismäßig hohe mechanische und elektromechanische Aufwand für die periodische Abschirmung des fotoelektrischen Elementes in Kauf genommen werden.

Der vorliegenden Erfindung liegt die Aufgabe zugrunde, ein Lichtmeßverfahren und ein Lichtmeßgerät zu entwickeln, bei dem keine beweglichen mechanischen Abschirmelemente zur Erzeugung einer Dunkelphase zum Zwecke eines Meßnullpunkt-Abgleiches erforderlich sind.

Die Aufgabe wird durch die in den Ansprüchen 1 und 4 gekennzeichnete Erfindung gelöst.

Da die Dunkelphase für den Nullabgleich des Meßgerätes durch Abschalten der Lichtquelle erzeugt wird, entfallen mechanische Abschirmvorrichtungen zwischen Lichteintrittsblende und lichtelektrischem Wandler. Dadurch ergibt sich gegenüber den bekannten Geräten der genannten Art eine einfachere und kompaktere Bauweise und eine Verringerung der Herstellungskosten. Eine entscheidende Einsparung im Gesamtaufwand wird durch das erfindungsgemäße Verfahren insbesondere bei Lichtmeßgeräten mit integriertem Zeitschalter erzielt, da Teile der Schalteinrichtung Funktionen übernehmen, die der Lichtmessung und der Belichtung gemeinsam sind.

Durch den Wegfall der mechanischen Abdunkelungsvorrichtung zwischen Lichteintrittsblende und lichtelektrischem Wandler kann die räumliche Anordnung des Wandlers in unmittelbarer Nähe der Lichteintrittsblende erfolgen, wodurch sich der weitere Vorteil ergibt, dass bei Bedarf bei der Messung ein großer Raumwinkel erfaßbar ist.

Weitere Merkmale und Vorteile ergeben sich aus den abhängigen Ansprüchen in Verbindung mit der Beschreibung eines Ausführungsbeispieles, das im folgenden anhand von Zeichnungen erläutert wird. Dabei zeigen :

Figur 1 Eine schematische Darstellung der Schaltungsanordnung des erfindungsgemäßen Lichtmeßgerätes.

Figur 2 Ein Impulsdiagramm, das den Impulsverlauf an den Ausgängen der Steuerstufe in der Schaltungsanordnung nach Figur 1 veranschaulicht.

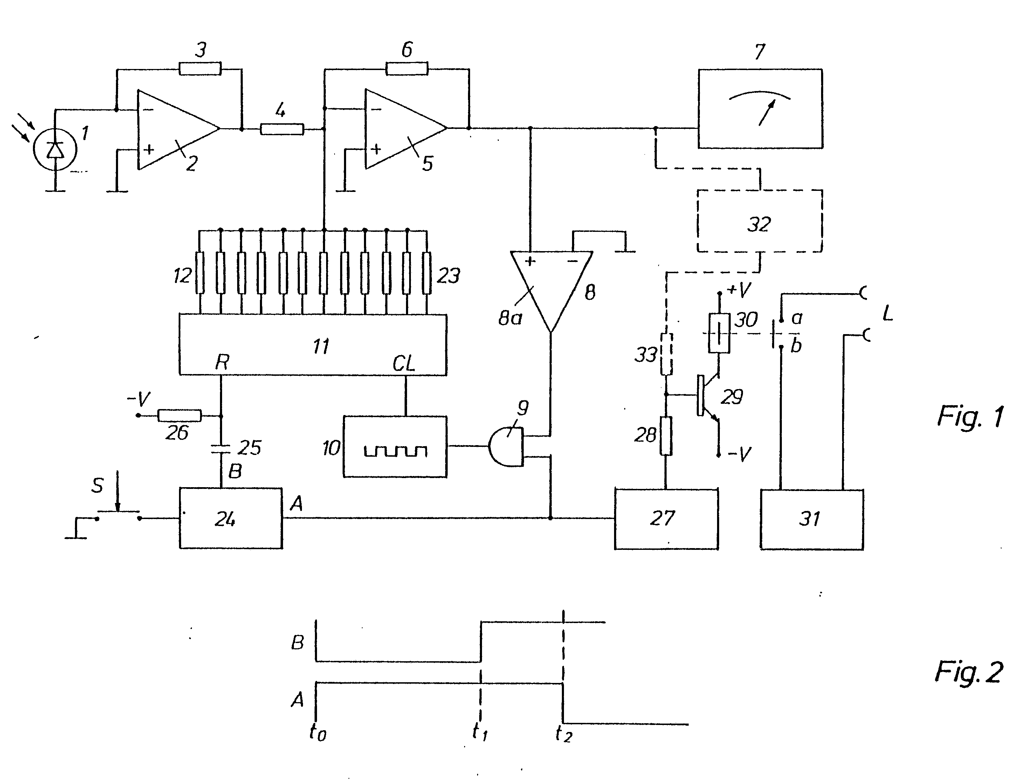

Ein fotoelektrischer Wandler, beispielsweise eine Fotodiode 1 befindet sich im Strahlengang des zu messenden Lichtes und ist mit dem invertierenden Eingang eines Operationsverstärkers 2 verbunden, dessen nicht invertierender Eingang am Masse- bzw. Bezugspotential liegt und der mittels eines Rückkopplungswiderstandes 3 als Strom-Spannungsumsetzer geschaltet ist, sodass sich am Verstärkerausgang eine dem Fotostrom der Diode proportionale Spannung ergibt. Dem Operationsverstärker 2 ist ein Widerstand 4 nachgeschaltet, der mit dem invertierenden Eingang eines weiteren Operationsverstärkers 5 verbunden ist, in dessen Rückkopplungszweig ein Widerstand 6 vorgesehen ist, der mit dem Widerstand 4 die Verstärkung des Operationsverstärkers 5 festlegt. An den Ausgang des Verstärkers 5 ist eine analog oder digital anzeigende Anzeigeeinheit 7 angeschlossen. Von derselben Anschlußstelle führt eine Regeleinrichtung, die einen Spannungskomparator 8, ein UND-Gatter 9, einen Taktgenerator 10, einen binären Zähler 11 sowie eine Reihe von Widerständen 12 bis 23 umfaßt, zum Verstärkereingang des Operationsverstärkers 5 zurück. Der Spannungskomparator 8 umfaßt einen Operationsverstärker 8a, dessen nicht invertierender Eingang mit dem Ausgang des Verstärkers 5 verbunden ist, während der invertierende Eingang am Masse- bzw. Bezugspotential liegt ; sein Ausgang nimmt somit die logischen Schaltzustände « 1 » oder « 0 » an je nachdem ob das Eingangspotential größer oder kleiner als das Bezugspotential ist, und mündet in das UND-Gatter 9, dessen weiterer Eingang mit dem Ausgang B einer noch zu beschreibenden Steuereinheit 24 verbunden ist. Der Ausgang des Gatters 9 wirkt über eine Verbindung zum Taktgenerator 10 so auf diesen ein, dass Taktimpulse festgesetzter Frequenz nur dann erzeugt und an den am Generatorausgang angeschlossenen Takteingang CL des Binärzählers 11 abgegeben werden, wenn das Gatter ein « 1 »-Signal abgibt. Der Binärzähler 11 ist ein 12-bit Zähler, dessen zwölf Ausgänge über je einen Widerstand 12 bis 23 mit dem invertierenden Eingang des Operationsverstärkers 5 verbunden sind. Zählerseitig liegt also jeder Widerstand je nach Schaltzustand des jeweiligen Zählerausganges entweder an einem « 1 »- oder « 0 » Signal, d. h. am Plus- oder am Minuspotential der Versorgungsspannung des Zählers. Ausgehend von der Zähler-Nullstellung, in der alle Widerstände am Minuspotential liegen, entstehen also für jede folgende Zählerstellung zwei Parallelkombinationen von einer Anzahl von Widerständen mit einem gemeinsamen Anschlußpunkt, von denen die eine anderseitig am Minus- und die zweite am Pluspotential der Versorgungsspannung liegt und somit einen Spannungsteiler bilden, dessen Abgriff mit dem Eingang des Operationsverstärkers 5 verbunden ist. Die Widerstandswerte der einzelnen Widerstände 12 bis 23 sind so bemessen, dass sich im Laufe des Zählvorganges am Abgriff des beschriebenen Spannungsteilers eine mit jedem Zählschritt treppenförmig anwachsende Spannung aufbaut, die zwischen Null- und Endstellung des Zählers den für den vorgesehenen Regelumfang erforderlichen Spannungsbereich rampenähnlich durchläuft. Der Rückstelleingang R des Zählers 11 ist über ein aus einem Kondensator 25 und einem Widerstand 26 bestehendes Differenzierglied mit der Steuerstufe 24 verbunden. Diese besteht im wesentlichen aus einer monostabilen, triggerbaren Kippstufe mit einem einzigen zeitbestimmenden RC-Glied und zwei unterschiedlichen Kippschwellen, sodass an zwei Ausgängen A und B nach Betätigen einer Starttaste S zur Auslösung eines Triggerimpulses gleichzeitig Impulse entgegengesetzter Polarität und unterschiedlicher Breite, wie im Diagramm der Figur 2 dargestellt, entstehen. Der Ausgang A der Steuerstufe 24 ist außer mit einem Eingang des Gatters 9 mit einem elektronischen Schalter 27 verbunden, der über einen Widerstand 28 am Basisanschluß eines Schalttransistors 29 liegt, in dessen Kollektorkreis sich ein Relais 30 befindet, dessen Schaltkontakte a und b über Zuleitungen mit einer Stromquelle 31 bzw. mit einer Lampenanschlußstelle L verbunden sind.

In einer vorteilhaften Kombination der Schaltungsanordnung zur Lichtmessung mit einer Zeitschalteinrichtung zur Steuerung der Belichtungszeit ist der Ausgang des Meßverstärkers 5 mit einem Zeitschalter 32 und dieser über einen Widerstand 33 mit dem Basisanschluß des Schalttransistors 29 verbunden, der in der oben beschriebenen Weise die Stromversorgung der Lichtquelle über das Relais 30 schaltet. Dadurch wird der auftretende Fotostrom zum zeitbestimmenden Element der Belichtung.

Die gesamte Schaltung wird aus einer im Schaltbild der Figur 1 nicht dargestellten Spannungsquelle mit symmetrischer Versorgungsspannung $+ V$, $- V$ gespeist.

Die Arbeitsweise der Schaltungsanordnung und der Ablauf des Meßnullpunkt-Abgleiches sind nun ohne weiteres überschaubar und seien im Zusammenwirken der einzelnen Funktionsgruppen zusammenfassend dargelegt : durch Drücken der Starttaste S entsteht am Ausgang A der Steuerstufe 24 ein Impuls, der über die Schaltvorrichtung 27, 29, 30 die an der Anschlußstelle L angeschlossene Lichtquelle für die Dauer des Impulses abschaltet und der gleichzeitig an einem Eingang des UND-Gatters 9 als logisches Signal « 1 » anliegt. Hervorgerufen durch die ansteigende Flanke des Impulses am Ausgang B der Steuerstufe 24 im Zeitpunkt $t_1$ (Figur 2) ergibt sich zeitlich verzögert gegenüber dem Einsetzen der Dunkelphase über das Differenzierglied 25, 26 ein Rückstellimpuls am Zählereingang R, wodurch der Zähler in Nullstellung versetzt wird und dem Verstärkereingang des Meßverstärkers 5 über die Parallelkombination der Widerstände 12 bis 23 ein Korrektursignal zugeführt wird, dessen Wert unterhalb der unteren Grenze des Störbereiches liegt. Dadurch entsteht am Ausgang des Meßverstärkers 5 eine Abweichung bestimmter Richtung vom Null- bzw. Bezugspotential (Sollpotential), die bewirkt, dass der Ausgang des Spannungskomparators 8 den Schaltzustand « 1 » annimmt und nun an beiden Eingängen des Gatters 9 ein « 1 »-Signal ansteht ;

dadurch wird der Taktgenerator aktiviert und der Zählvorgang des Zählers setzt ein. Damit steigt das Korrektursignal in der oben beschriebenen Weise rampenähnlich solange an, bis die aus der Differenz zwischen Korrektursignal und eventuellem Störsignal im Meßverstärker S resultierende Abweichung vollständig kompensiert ist und der Komparator folglich seinen Schaltzustand ändert ; als Folge davon sperrt das Gatter 9, der Taktgenerator und der Zählvorgang werden gestoppt und der erreichte Wert des Stellsignales bleibt durch die Zählerstellung gespeichert und somit am Meßverstärkereingang wirksam. Mit dem Ende des Impulses in A wird die Dunkelphase abgeschlossen und die Lichtquelle eingeschaltet, d. h. das Meßgerät ist für die Meßphase bereit.

Aus der Figur 2 geht hervor, dass der Zeitpunkt $t_1$ des Einsetzens des Abgleiches gegenüber dem Zeitpunkt $t_0$ des Abschaltens der Lichtquelle verzögert ist. Dadurch ist gewährleistet, dass bei Abgleicheinsatz die Lichtquelle mit Sicherheit vollständig erloschen ist, d. h. die Dunkelphase bereits eingesetzt hat. Die Taktfrequenz des Zählers ist so bemessen, dass dieser im Zeitraum $t_2 - t_1$ zwischen Entstehen des Rückstellimpulses und Ende der Dunkelphase den gesamten Zählumfang durchzählen kann. In der beschriebenen Ausführungsform beträgt die Verzögerung $t_1 - t_0$ etwa 1,5 Sekunden und die für den eigentlichen Abgleich zur Verfügung stehende Zeitdauer $t_2 - t_1$ etwa 0,5 Sekunden.

Dauer und zeitlicher Ablauf des Abgleichvorganges sind also durch die Schaltungsauslegung bestimmt, wodurch ein sicheres, von der Bedienperson unabhängiges Abgleich- bzw. Meßergebnis gewährleistet wird.

Das Auslösen des Abgleichvorganges durch Betätigen eines Bedienungselementes bringt den Vorteil mit sich, dass der Zeitpunkt des Abgleiches von der Bedienperson gewählt und optimal in den Arbeitsablauf eingereiht werden kann und die Häufigkeit des Nachgleichs den Meß- bzw. Umgebungsbedingungen anpaßbar ist.

## Patentansprüche

1. Lichtmeßverfahren, bei welchem in einer der Meßphase vorausgehenden Dunkelphase ein Ab- bzw. Nachgleich des Meßnullpunktes erfolgt, wobei das in der Dunkelphase an einem Meßverstärkerausgang vorhandene, hauptsächlich aus Fehleranteilen zusammengesetzte Signal in einer zwischen Ausgang und Eingang eines Meßverstärkers gelegten Regeleinrichtung kompensiert wird und das Kompensationssignal durch Speicherung auch in der Meßphase erhalten bleibt, dadurch gekennzeichnet, dass die Dunkelphase durch Abschalten der das Meßlicht erzeugenden Lichtquelle hervorgerufen wird.

2. Lichtmeßverfahren nach Anspruch 1, dadurch gekennzeichnet, dass die Lichtquelle durch Betätigen einer Auslösetaste abgeschaltet wird und nach einer vorgegebenen Zeit, innerhalb der der Abgleichvorgang selbsttätig abläuft, selbsttätig wieder einschaltet.

3. Lichtmeßverfahren nach den vorhergehenden Ansprüchen, dadurch gekennzeichnet, dass der Abgleicheinsatz zeitlich verzögert gegenüber dem Ausschalten der Lichtquelle erfolgt.

4. Lichtmeßgerät zur Durchführung des Verfahrens nach den vorhergehenden Ansprüchen mit mindestens einem lichtelektrischen Wandler und einer diesem nachgeschalteten Meßauswertschaltung mit Anzeigevorrichtung sowie einer Regeleinrichtung zur Störsignalkompensation, gekennzeichnet durch eine steuerbare Schaltstufe (27, 29, 30) zum Ein- und Ausschalten einer das Meßlicht erzeugenden Lichtquelle und eine den Ablauf des Meßnullpunkt-Abgleiches steuernde Steuereinrichtung (24).

5. Lichtmeßgerät nach Anspruch 4, dadurch gekennzeichnet, dass die Regeleinrichtung zur Störsignalkompensation einen binären Abgleichzähler (11) umfaßt.

6. Lichtmeßgerät nach Anspruch 4 und 5 dadurch gekennzeichnet, dass der Abgleicheinsatz durch einen von der Steuereinheit (24) ausgehenden Impuls an den Rückstelleingang des Binärzählers (11) ausgelöst wird.

7. Lichtmeßgerät nach Anspruch 6 dadurch gekennzeichnet, dass die Zählernullstellung Ausgangsstellung eines jeden Abgleichvorganges ist.

8. Lichtmeßgerät nach Anspruch 7 dadurch gekennzeichnet, dass der Binärzähler (11) im Zeitraum zwischen dem Auftreten des Rückstellimpulses und dem Ende der Dunkelphase den vollen Zählumfang durchlaufen kann.

9. Lichtmeßgerät nach einem der vorhergehenden Ansprüche 4 bis 8 dadurch gekennzeichnet, dass der Ausgang eines Meßverstärkers (5) mit einem Zeitschalter (32) verbunden ist, der über Schaltelemente (27, 29, 30) die Stromversorgung der Lichtquelle schaltet.

## Claims

1. Method for the measurement of light, in which the measurement zero point is adjusted or readjusted during a dark phase that precedes the measuring phase, the signal present during the dark phase at the output of a measurement amplifier and composed mainly of error components being compensated for in a regulating device located between the output and the input of a measurement amplifier and the compensating signal being maintained even during the measuring phase by storage, characterised in that the dark phase is produced by switching off the light source that generates the measuring light.

2. Method for the measurement of light according to claim 1, characterised in that the light source is switched off by operating a release button and is switched on again automatically after a given time within which the adjustment process takes place automatically.

3. Method for the measurement of light according to the preceding claims, characterised in that the start of the adjustment process is delayed in time relative to the switching off of the light source.

4. Light-measuring device for carrying out the method according to the preceding claims, having at least one photoelectric transducer and a measurement evaluation circuit that is located downstream thereof and has a display device, and also a regulating device for compensating for interference signals, characterised by a controllable switching stage (27, 29, 30) for switching on and off a light source that generates the measuring light, and by a control device (24) that controls the process of adjusting the measurement zero point.

5. Light-measuring device according to claim 4, characterised in that the regulating device for compensating for interference signals comprises a binary adjustment counter (11).

6. Light-measuring device according to claims 4 and 5, characterised in that the start of the adjustment process is triggered by a pulse from the control unit (24) to the reset input of the binary counter (11).

7. Light-measuring device according to claim 6, characterised in that the zero position of the counter is the starting position of each adjustment process.

8. Light-measuring device according to claim 7, characterised in that, in the interval between the occurrence of the reset pulse and the end of the dark phase, the binary counter (11) can run through the entire counting range.

9. Light-measuring device according to any one of the preceding claims 4 to 8, characterised in that the output of a measurement amplifier (5) is connected to a time switch (32) that switches the power supply of the light source *via* switching elements (27, 29, 30).

**Revendications**

1. Procédé pour la mesure de lumière, dans lequel a lieu, au cours d'une phase d'obscurité précédant la phase de mesure, un équilibrage ou un contrôle du point zéro de mesure, le signal présent au cours de la phase d'obscurité à la sortie d'un amplificateur de mesure, constitué essentiellement de composants perturbateurs, étant compensé dans un dispositif de réglage disposé entre la sortie et l'entrée d'un amplificateur de mesure, le signal de compensation se maintenant grâce à une mémorisation au cours de la phase de mesure, caractérisé en ce que la phase d'obscurité est provoquée par une coupure de la source lumineuse qui produit la lumière de mesure.

2. Procédé pour la mesure de lumière selon la revendication 1, caractérisé en ce que la source lumineuse est coupée par actionnement d'une touche de déclenchement, et, après un certain temps, au cours duquel l'opération d'équilibrage se poursuit automatiquement, est automatiquement coupée de nouveau.

3. Procédé pour la mesure de lumière selon les revendications précédentes, caractérisé en ce que le déclenchement de l'équilibrage est retardé dans le temps par rapport à la coupure de la source lumineuse.

4. Dispositif pour la mesure de lumière destiné à la mise en œuvre du procédé selon les revendications précédentes, avec au moins un convertisseur photoélectrique et, en aval de ce dernier, un circuit d'évaluation possédant un dispositif d'affichage, et aussi un dispositif de réglage destiné à la compensation des signaux perturbateurs, caractérisé par une unité de commutation réglable (27, 29, 30), destinée à mettre en marche et couper une source lumineuse produisant la lumière à mesurer, et par un dispositif de commande (24) qui commande la séquence de l'équilibrage du point zéro de mesure.

5. Dispositif selon la revendication 4, caractérisé en ce que le dispositif de réglage destiné à la compensation des signaux perturbateurs possède un compteur d'équilibrage binaire (11).

6. Dispositif selon les revendications 4 et 5, caractérisé en ce que l'équilibrage est déclenché au niveau de l'entrée de rappel du compteur binaire (11) par une impulsion qui part de l'unité de commande (24).

7. Dispositif selon la revendication 6, caractérisé en ce que la position zéro du compteur est la position de départ de chaque processus d'équilibrage.

8. Dispositif selon la revendication 7, caractérisé en ce que le compteur binaire (11) peut parcourir la totalité de l'intervalle de comptage sur le temps qui s'écoule entre l'apparition de l'impulsion de rappel et la fin de la phase d'obscurité.

9. Dispositif selon l'une des revendications précédentes 4 à 8, caractérisé en ce que la sortie d'un amplificateur de mesure (5) est reliée à un interrupteur horaire (32), lequel, par l'intermédiaire d'éléments de commutation (27, 29, 30), assure la commutation de l'alimentation en courant de la source lumineuse.

Fig. 1

Fig. 2

0 046 491